# EUROPEAN PATENT APPLICATION

(11) **EP 4 797 858 A1**
(43) Date of publication of application: **26.08.2026**
(21) Application number: 24890472.4
(22) Date of filing: 28.10.2024
(51) Int. Cl.: H04W 76/00

(54) **COMMUNICATION METHOD AND RELATED DEVICE**

(30) Priority: 15.11.2023 CN 202311547635
(71) Applicant: HUAWEI TECHNOLOGIES CO., LTD., Shenzhen 518129 (CN)
(72) Inventor: XU, Chen, Shenzhen, Guangdong 518129 (CN); ZHANG, Gongzheng, Shenzhen, Guangdong 518129 (CN); WANG, Jian, Shenzhen, Guangdong 518129 (CN); LI, Rong, Shenzhen, Guangdong 518129 (CN)
(74) Representative: Goddar, Heinz J.
(86) International application number: PCT/CN2024/127666
(87) International publication number: WO 2025/103115

(57) **Abstract**

This application provides a communication method and a related device, which can reduce overheads for indicating an AI model while enabling a computing capability of a communication node to be used for model processing on the AI model. In the method, after sending first information indicating a correspondence between N communication parameters and M AI models, a first communication apparatus may further send second information used to determine a first communication parameter among the N communication parameters. In the correspondence, the first communication parameter corresponds to a first AI model among the M AI models. In other words, the first communication apparatus may indicate the first AI model via the correspondence indicated by the first information and the first communication parameter indicated by the second information, so that a receiver of the first information and the second information can subsequently perform processing based on the first AI model.

## Description

This application claims priority to Chinese Patent Application No. 202311547635.9, filed with the China National Intellectual Property Administration on November 15, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication performed between two or more communication nodes without conductor or cable propagation. The communication nodes generally include a network device and a terminal device.

Currently, in wireless communication systems, a communication node typically has a signal receiving and sending capability and a computing capability. A network device having a computing capability is used as an example. The computing capability of the network device mainly provides computing capability support for signal receiving and sending capabilities (for example, performs sending processing and receiving processing on signals), to implement communication between the network device and other communication nodes.

However, in communication networks, in addition to providing computing capability support for the foregoing communication task by using the computing capability of the communication node, the communication node may further have surplus computing capabilities. Therefore, how to use these computing capabilities is an urgent technical problem to be resolved.

### SUMMARY

This application provides a communication method and a related device, which can reduce overheads for indicating an artificial intelligence (artificial intelligence, AI) model while enabling a computing capability of a communication node to be used for model processing on the AI model.

A first aspect of this application provides a communication method. The method is performed by a first communication apparatus. The first communication apparatus may be a communication device (for example, a network device or a terminal device). Alternatively, the first communication apparatus may be a component (for example, a processor, a chip, or a chip system) in a communication device. Alternatively, the first communication apparatus may be a logic module or software that can implement all or a part of functions of a communication device. In the method, the first communication apparatus sends first information. The first information indicates a correspondence between N communication parameters and M AI models. Both N and M are positive integers. The first communication apparatus sends second information. The second information is used to determine a first communication parameter among the N communication parameters. In the correspondence, the first communication parameter corresponds to a first AI model among the M AI models.

Based on the foregoing technical solution, after the first communication apparatus sends the first information indicating the correspondence between the N communication parameters and the M AI models, the first communication apparatus may further send the second information used to determine the first communication parameter among the N communication parameters. In the correspondence, the first communication parameter corresponds to the first AI model among the M AI models. In other words, the first communication apparatus may indicate the first AI model via the correspondence indicated by the first information and the first communication parameter indicated by the second information, so that a receiver of the first information and the second information can subsequently perform processing based on the first AI model. Therefore, when a communication apparatus in a communication system serves as an AI participating node, a computing capability of the communication apparatus can be used for AI processing, and an implementation in which an AI model is indicated by reusing an indication of a communication parameter can also reduce overheads for indicating the AI model.

In this application, terms such as "AI model", "neural network model", "AI neural network model", "machine learning model", and "AI processing model" may be used interchangeably.

It should be understood that an AI model (for example, any one of the M AI models or any one of Y AI models below) in this application may be deployed in one or more communication apparatuses. Optionally, when the AI model is deployed in one communication apparatus, the AI model may be referred to as a single-end deployed AI model. When the AI model is deployed in a plurality of communication apparatuses, the AI model may be referred to as a dual-end/multi-end deployed AI model.

For example, the following describes a process of processing the AI model by using an example in which the AI model is the first AI model.

In an implementation example, the first AI model may be deployed in the first communication apparatus. Input data of the first AI model may include data from a second communication apparatus. Correspondingly, after the second communication apparatus receives the first information and the second information that are sent by the first communication apparatus, the second communication apparatus may send data associated with the first AI model to the first communication apparatus, so that the first communication apparatus implements model processing on the first AI model based on the data associated with the first AI model. Model processing in this application may be understood as processing a model. The processing includes one or more of updating the model, training the model, inferring the model, selecting the model, switching the model, activating the model, deactivating the model, or identifying the model.

In another implementation example, the first AI model may be deployed in the second communication apparatus. Correspondingly, after the second communication apparatus receives the first information and the second information that are sent by the first communication apparatus, the second communication apparatus may perform model processing on the first AI model.

In another implementation example, the first AI model may include a first AI submodel and a second AI submodel. In other words, the first AI submodel and the second AI submodel may be different parts in a same AI model. For example, input data of the second AI submodel may include output data of the first AI submodel, or input data of the first AI submodel may include output data of the second AI submodel. For example, the first AI submodel is deployed in the first communication apparatus, the second AI submodel is deployed in the second communication apparatus, and the input data of the second AI submodel includes the output data of the first AI submodel. After the first communication apparatus indicates the first AI model through the first information and the second information, the first communication apparatus may send the output data of the first AI submodel to the second communication apparatus, and the second communication apparatus may use the output data of the first AI submodel as one piece of input data of the second AI submodel, and perform model processing on the second AI submodel.

Optionally, in addition to the first AI submodel and the second AI submodel, the first AI model may further include another AI submodel. The another AI submodel may be deployed in a communication apparatus other than the first communication apparatus and the second communication apparatus. This is not limited herein.

It should be understood that a wireless communication signal may be transmitted (for example, receiving and sending of configuration information of a communication resource, or receiving and sending of a reference signal) between different communication apparatuses (the first communication apparatus and the second communication apparatus). An AI model (for example, any one of the M AI models or any one of the Y AI models below) in this application may be used to manage (including at least one of configuring, updating, or optimizing) the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, or an AI model used to replace one or more modules in a transmitter and/or a receiver.

Optionally, the first information indicates the correspondence between the N communication parameters and the M AI models. The first information may include model identifiers (Model IDs) of the M AI models, model indexes (Model Indexes) of the M AI models, or the like. In addition, the first information may include identifiers of the N communication parameters, indexes of the N communication parameters, or the like. This can reduce overheads of the first information.

Optionally, the first information may include the N communication parameters and/or model parameters of the M AI models.

Optionally, the first communication parameter determined by using the second information may include one or more parameters among the N communication parameters. Correspondingly, the first AI model corresponding to the first communication parameter may include one or more AI models among the M AI models.

It should be noted that both N and M are positive integers, and a value relationship between N and M may have various implementations.

For example, when N is equal to M, the N communication parameters may be in a one-to-one correspondence with the M AI models.

For another example, when N is less than M, at least two AI models among the M AI models may be indicated by one of the N communication parameters. In other words, the first AI model corresponding to the first communication parameter determined by using the second information may be the at least two AI models (or any one of the at least two AI models). Optionally, the at least two AI models may be AI models with same or similar model structures, the at least two AI models may be AI models with same or similar model functions, or the like.

For another example, when N is greater than M, one of the M AI models may be indicated by at least two of the N communication parameters.

In a possible implementation of the first aspect, the first communication parameter includes a parameter associated with modulation and demodulation, and the first AI model includes an AI model used for modulation and/or demodulation.

Based on the foregoing technical solution, the first communication parameter determined by using the second information may include the parameter associated with modulation and demodulation. Correspondingly, in the correspondence, the first AI model corresponding to the first communication parameter may include the AI model used for modulation and/or demodulation. In this way, the AI model used for modulation and/or demodulation can be indicated while the parameter associated with modulation and demodulation is indicated, so that the second communication apparatus can subsequently participate in, based on the parameter associated with modulation and demodulation, model processing on the AI model used for modulation and/or demodulation.

Optionally, the AI model used for modulation and/or demodulation may be referred to as an intelligent modulation model, an intelligent demodulation model, an intelligent modulation and demodulation model, or the like.

Optionally, the parameter associated with modulation and demodulation includes one or more of the following: a modulation and coding scheme (modulation and coding scheme, MCS), a frequency domain resource indication, a transmit power control command (transmit power control command, TPC command), or a transmitted precoding matrix indicator (transmitted precoding matrix indicator, TPMI).

In a possible implementation of the first aspect, the first communication parameter includes configuration information of a reference signal, and the first AI model includes an AI model used for channel prediction.

Based on the foregoing technical solution, the first communication parameter determined by using the second information may include the configuration information of the reference signal. Correspondingly, in the correspondence, the first AI model corresponding to the first communication parameter may include the AI model used for channel prediction. In this way, the AI model used for channel prediction can be indicated while the configuration information of the reference signal is indicated. Because receiving and sending of the reference signal configured based on the configuration information of the reference signal is associated with a channel prediction process, in this manner, the second communication apparatus can subsequently participate in, based on the reference signal transmitted based on the configuration information of the reference signal, model processing on the AI model used for channel prediction.

Optionally, the AI model used for channel prediction may be referred to as a channel estimation model, a channel prediction model, a channel simulation and recovery model, a channel reconstruction model, a channel obtaining model, a channel inference model, or the like.

Optionally, the configuration information of the reference signal includes at least one of the following: time domain configuration information, frequency domain configuration information, spatial domain configuration information, port information, periodicity information, or codebook configuration information.

In a possible implementation of the first aspect, the first communication parameter includes a parameter associated with beam management, and the first AI model includes an AI model used for beam management.

Based on the foregoing technical solution, the first communication parameter determined by using the second information may include the parameter associated with beam management. Correspondingly, in the correspondence, the first AI model corresponding to the first communication parameter may include the AI model used for beam management. In this way, the AI model used for beam management can be indicated while the parameter associated with beam management is indicated, so that the second communication apparatus can subsequently participate in, based on the parameter associated with beam management, model processing on the AI model used for beam management.

Optionally, the AI model used for beam management may be referred to as a beam management model, a beam optimization model, or the like.

Optionally, the parameter associated with beam management includes at least one of the following: channel characteristic information of a cell, or quantity information of beams associated with the AI model used for beam management.

In a possible implementation of the first aspect, the method further includes: The first communication apparatus receives or sends AI data of the first AI model.

Based on the foregoing technical solution, after the first communication apparatus sends the second information to indicate the first AI model, the first communication apparatus may further receive or send the AI data of the first AI model, to implement model processing on the first AI model through the AI data.

In a possible implementation of the first aspect, that the first communication apparatus receives or sends the AI data of the first AI model includes: The first communication apparatus receives or sends the AI data of the first AI model based on the first communication parameter.

Based on the foregoing technical solution, the first communication apparatus may receive or send the AI data of the first AI model based on the first communication parameter determined by using the second information. In this way, model processing on the AI model can be implemented through the communication parameter indicated by the second information while the second information can indicate the first communication parameter and the first AI model.

In a possible implementation of the first aspect, the second information includes the first communication parameter among the N communication parameters, or the second information includes an index of the first communication parameter among the N communication parameters.

Based on the foregoing technical solution, the second information may be implemented in any one of the foregoing manners, to improve flexibility of implementing the solution. In addition, when the second information includes the index of the first communication parameter among the N communication parameters, overheads for indicating the first communication parameter can be reduced.

In a possible implementation of the first aspect, before the first communication apparatus sends the first information, the method further includes: The first communication apparatus receives third information. The third information indicates K AI models supported by the second communication apparatus.

Optionally, at least one of the M AI models is the same as at least one of the K AI models.

Based on the foregoing technical solution, the first communication apparatus may further receive the third information indicating the K AI models supported by the second communication apparatus. Subsequently, the first communication apparatus may determine the first information based on the third information. In this way, the M AI models indicated by the first information can maximally match a capability supported by the second communication apparatus, to improve a success rate of model processing on the M AI models.

Optionally, after the first communication apparatus receives the third information, the first communication apparatus may use, as a basis for determining the first information, at least one of the K AI models indicated by the third information, or when the first communication apparatus determines that the K AI models are not applicable, the first communication apparatus may not need to use the third information as a basis for determining the first information.

In a possible implementation of the first aspect, the M AI models are included in the K AI models.

Based on the foregoing technical solution, the M AI models indicated by the first information may be included in the K AI models indicated by the third information, so that the M AI models indicated by the first information can match the capability supported by the second communication apparatus, to improve the success rate of model processing on the M AI models.

In a possible implementation of the first aspect, P AI models among the M AI models are different from the K AI models. P is a positive integer. The first information includes model parameters of the P AI models.

Optionally, a value relationship between P and K is not limited. For example, P is less than K, P is equal to K, or P is greater than K.

Based on the foregoing technical solution, the P AI models among the M AI models indicated by the first information may be different from the K AI models indicated by the third information, and the first information may include the model parameters of the P AI models, so that the second communication apparatus can obtain, through the first information, the model parameters of the P AI models other than the supported K AI models indicated by the third information. This can improve flexibility of indicating the M AI models through the second information.

Optionally, the third information includes identifiers or indexes of the K AI models. This can reduce overheads of the third information.

Optionally, when the P AI models among the M AI models are different from the K AI models, the model parameters of the P AI models may alternatively be carried in information other than the first information. This is not limited herein. In other words, the first information may not include the model parameters of the P AI models.

In a possible implementation of the first aspect, after the first communication apparatus sends the first information, the method further includes: The first communication apparatus receives fourth information and/or fifth information. The fourth information includes a model parameter of a trained AI model. The fifth information includes auxiliary information. The first communication apparatus sends sixth information. The sixth information indicates a correspondence between X communication parameters and Y AI models. The correspondence between the X communication parameters and the Y AI models is determined based on the fourth information and/or the fifth information. Both X and Y are positive integers.

Based on the foregoing technical solution, the first communication apparatus may receive the fourth information including the model parameter of the trained AI model, and/or the first communication apparatus may receive the fifth information including the auxiliary information, so that the first communication apparatus may determine the correspondence between the X communication parameters and the Y AI models based on the fourth information and/or the fifth information, and indicate the correspondence through the sixth information. In other words, the first communication apparatus may update the correspondence between the communication parameters and the AI models through the fourth information and/or the fifth information, and indicate an updated correspondence.

Optionally, the auxiliary information is used to generate/train/reinforce/select/switch/update an AI model, to obtain the Y AI models. In other words, the auxiliary information may include at least one of auxiliary information for training the AI model, training data of the AI model, auxiliary information for collecting the training data of the AI model, and auxiliary information for inferring the AI model.

Optionally, the sixth information includes model identifiers of the Y AI models. This can reduce overheads of the sixth information.

Optionally, the auxiliary information includes at least one of the following: cell information, a cell configuration, distribution of the first communication apparatus and/or the second communication apparatus, a speed of the first communication apparatus and/or the second communication apparatus, a channel power delay profile, a configuration of the first communication apparatus and/or the second communication apparatus, an antenna configuration of the first communication apparatus and/or the second communication apparatus, a beam configuration of the first communication apparatus and/or the second communication apparatus, an antenna radiation pattern of the first communication apparatus and/or the second communication apparatus, interference information, a signal-to-(interference-plus-)noise ratio, an MCS, a channel rank (rank), a data error, data quality, a resource granularity, or location information.

Optionally, the trained AI model may be obtained through training based on the first AI model, or may be obtained by the second communication apparatus through training based on another AI model (the another AI model may be one of the M AI models, or may not belong to the M AI models). This is not limited herein. For example, the first communication apparatus and/or the second communication apparatus may continue training (or perform retraining) based on the first AI model. For example, if model performance of an AI model obtained through continued training is higher than a threshold, a trained first AI model may be used as a basis for determining the fourth information. For another example, if the model performance of the AI model obtained through continued training is lower than the threshold, the trained first AI model may not be used as a basis for determining the fourth information, and training is performed based on another model or retraining is performed with a random parameter, to obtain the model parameter of the trained AI model included in the fourth information.

A second aspect of this application provides a communication method. The method is performed by a second communication apparatus. The second communication apparatus may be a communication device (for example, a terminal device). Alternatively, the second communication apparatus may be a component (for example, a processor, a chip, or a chip system) in a communication device. Alternatively, the second communication apparatus may be a logic module or software that can implement all or a part of functions of a communication device. In the method, the second communication apparatus receives first information. The first information indicates a correspondence between N communication parameters and M AI models. Both N and M are positive integers. The second communication apparatus receives second information. The second information indicates a first communication parameter among the N communication parameters. In the correspondence, the first communication parameter corresponds to a first AI model among the M AI models.

Based on the foregoing technical solution, after the second communication apparatus receives the first information indicating the correspondence between the N communication parameters and the M AI models, the first communication apparatus may further receive the second information used to determine the first communication parameter among the N communication parameters. In the correspondence, the first communication parameter corresponds to the first AI model among the M AI models. In other words, a first communication apparatus may indicate the first AI model via the correspondence indicated by the first information and the first communication parameter indicated by the second information, so that the second communication apparatus can subsequently perform processing based on the first AI model. Therefore, when a communication apparatus in a communication system serves as an AI participating node, a computing capability of the communication apparatus can be used for AI processing, and an implementation in which an AI model is indicated by reusing an indication of a communication parameter can also reduce overheads for indicating the AI model.

In a possible implementation of the second aspect, the first communication parameter includes a parameter associated with modulation and demodulation, and the first AI model includes an AI model used for modulation and/or demodulation.

Based on the foregoing technical solution, the first communication parameter determined by using the second information may include the parameter associated with modulation and demodulation. Correspondingly, in the correspondence, the first AI model corresponding to the first communication parameter may include the AI model used for modulation and/or demodulation. In this way, the AI model used for modulation and/or demodulation can be indicated while the parameter associated with modulation and demodulation is indicated, so that the second communication apparatus can subsequently participate in, based on the parameter associated with modulation and demodulation, model processing on the AI model used for modulation and/or demodulation.

Optionally, the AI model used for modulation and/or demodulation may be referred to as an intelligent modulation model, an intelligent demodulation model, an intelligent modulation and demodulation model, or the like.

Optionally, the parameter associated with modulation and demodulation includes one or more of the following: a modulation and coding scheme (modulation and coding scheme, MCS), a frequency domain resource indication, a transmit power control command (transmit power control command, TPC command), or a transmitted precoding matrix indicator (transmitted precoding matrix indicator, TPMI).

In a possible implementation of the second aspect, the first communication parameter includes configuration information of a reference signal, and the first AI model includes an AI model used for channel prediction.

Based on the foregoing technical solution, the first communication parameter determined by using the second information may include the configuration information of the reference signal. Correspondingly, in the correspondence, the first AI model corresponding to the first communication parameter may include the AI model used for channel prediction. In this way, the AI model used for channel prediction can be indicated while the configuration information of the reference signal is indicated. Because receiving and sending of the reference signal configured based on the configuration information of the reference signal is associated with a channel prediction process, in this manner, the second communication apparatus can subsequently participate in, based on the reference signal transmitted based on the configuration information of the reference signal, model processing on the AI model used for channel prediction.

Optionally, the AI model used for channel prediction may be referred to as a channel estimation model, a channel prediction model, a channel simulation and recovery model, a channel reconstruction model, a channel obtaining model, a channel inference model, or the like.

Optionally, the configuration information of the reference signal includes at least one of the following: time domain configuration information, frequency domain configuration information, spatial domain configuration information, port information, periodicity information, or codebook configuration information.

In a possible implementation of the second aspect, the first communication parameter includes a parameter associated with beam management, and the first AI model includes an AI model used for beam management.

Based on the foregoing technical solution, the first communication parameter determined by using the second information may include the parameter associated with beam management. Correspondingly, in the correspondence, the first AI model corresponding to the first communication parameter may include the AI model used for beam management. In this way, the AI model used for beam management can be indicated while the parameter associated with beam management is indicated, so that the second communication apparatus can subsequently participate in, based on the parameter associated with beam management, model processing on the AI model used for beam management.

Optionally, the AI model used for beam management may be referred to as a beam management model, a beam optimization model, or the like.

Optionally, the parameter associated with beam management includes at least one of the following: channel characteristic information of a cell, or quantity information of beams associated with the AI model used for beam management.

In a possible implementation of the second aspect, the method further includes: The second communication apparatus receives or sends AI data of the first AI model.

Based on the foregoing technical solution, after the second communication apparatus receives the second information to determine the first AI model, the second communication apparatus may further receive or send the AI data of the first AI model, to implement model processing on the first AI model through the AI data.

In a possible implementation of the second aspect, that the second communication apparatus receives or sends the AI data of the first AI model includes: The second communication apparatus receives or sends the AI data of the first AI model based on the first communication parameter.

Based on the foregoing technical solution, the second communication apparatus may receive or send the AI data of the first AI model based on the first communication parameter determined by using the second information. In this way, model processing on the AI model can be implemented through the communication parameter indicated by the second information while the second information can indicate the first communication parameter and the first AI model.

In a possible implementation of the second aspect, the second information includes the first communication parameter among the N communication parameters, or the second information includes an index of the first communication parameter among the N communication parameters.

Based on the foregoing technical solution, the second information may be implemented in any one of the foregoing manners, to improve flexibility of implementing the solution. In addition, when the second information includes the index of the first communication parameter among the N communication parameters, overheads for indicating the first communication parameter can be reduced.

In a possible implementation of the second aspect, before the second communication apparatus receives the first information, the method further includes: The second communication apparatus sends third information. The third information indicates K AI models supported by the second communication apparatus.

Optionally, at least one of the M AI models is the same as at least one of the K AI models.

Based on the foregoing technical solution, the second communication apparatus may further send the third information indicating the K AI models supported by the second communication apparatus. Subsequently, the first communication apparatus may determine the first information based on the third information. In this way, the M AI models indicated by the first information can maximally match a capability supported by the second communication apparatus, to improve a success rate of model processing on the M AI models.

Optionally, after the first communication apparatus receives the third information, the first communication apparatus may use, as a basis for determining the first information, at least one of the K AI models indicated by the third information, or when the first communication apparatus determines that the K AI models are not applicable, the first communication apparatus may not need to use the third information as a basis for determining the first information.

In a possible implementation of the second aspect, the M AI models are included in the K AI models.

Based on the foregoing technical solution, the M AI models indicated by the first information may be included in the K AI models indicated by the third information, so that the M AI models indicated by the first information can match the capability supported by the second communication apparatus, to improve the success rate of model processing on the M AI models.

In a possible implementation of the second aspect, P AI models among the M AI models are different from the K AI models. P is a positive integer. The first information includes model parameters of the P AI models.

Optionally, a value relationship between P and K is not limited. For example, P is less than K, P is equal to K, or P is greater than K.

Based on the foregoing technical solution, the P AI models among the M AI models indicated by the first information may be different from the K AI models indicated by the third information, and the first information may include the model parameters of the P AI models, so that the second communication apparatus can obtain, through the first information, the model parameters of the P AI models other than the supported K AI models indicated by the third information. This can improve flexibility of indicating the M AI models through the second information.

Optionally, the third information includes identifiers or indexes of the K AI models. This can reduce overheads of the third information.

Optionally, when the P AI models among the M AI models are different from the K AI models, the model parameters of the P AI models may alternatively be carried in information other than the first information. This is not limited herein. In other words, the first information may not include the model parameters of the P AI models.

In a possible implementation of the second aspect, after the second communication apparatus receives the first information, the method further includes: The second communication apparatus sends fourth information and/or fifth information. The fourth information includes a model parameter of a trained AI model. The fifth information includes auxiliary information. The second communication apparatus receives sixth information. The sixth information indicates a correspondence between X communication parameters and Y AI models. The correspondence between the X communication parameters and the Y AI models is determined based on the fourth information and/or the fifth information. Both X and Y are positive integers.

Based on the foregoing technical solution, the first communication apparatus may receive the fourth information including the model parameter of the trained AI model, and/or the first communication apparatus may receive the fifth information including the auxiliary information, so that the first communication apparatus may determine the correspondence between the X communication parameters and the Y AI models based on the fourth information and/or the fifth information, and indicate the correspondence through the sixth information. In other words, the first communication apparatus may update the correspondence between the communication parameters and the AI models through the fourth information and/or the fifth information, and indicate an updated correspondence.

Optionally, the auxiliary information is used to generate/train/reinforce/select/switch/update an AI model, to obtain the Y AI models. In other words, the auxiliary information may include at least one of auxiliary information for training the AI model, training data of the AI model, auxiliary information for collecting the training data of the AI model, and auxiliary information for inferring the AI model.

Optionally, the sixth information includes model identifiers of the Y AI models. This can reduce overheads of the sixth information.

Optionally, the auxiliary information includes at least one of the following: cell information, a cell configuration, distribution of the first communication apparatus and/or the second communication apparatus, a speed of the first communication apparatus and/or the second communication apparatus, a channel power delay profile, a configuration of the first communication apparatus and/or the second communication apparatus, an antenna configuration of the first communication apparatus and/or the second communication apparatus, a beam configuration of the first communication apparatus and/or the second communication apparatus, an antenna radiation pattern of the first communication apparatus and/or the second communication apparatus, interference information, a signal-to-(interference-plus-)noise ratio, an MCS, a channel rank (rank), a data error, data quality, a resource granularity, or location information.

Optionally, the trained AI model may be obtained through training based on the first AI model, or may be obtained by the second communication apparatus through training based on another AI model (the another AI model may be one of the M AI models, or may not belong to the M AI models). This is not limited herein. For example, the first communication apparatus and/or the second communication apparatus may continue training (or perform retraining) based on the first AI model. For example, if model performance of an AI model obtained through continued training is higher than a threshold, a trained first AI model may be used as a basis for determining the fourth information. For another example, if the model performance of the AI model obtained through continued training is lower than the threshold, the trained first AI model may not be used as a basis for determining the fourth information, and training is performed based on another model or retraining is performed with a random parameter, to obtain the model parameter of the trained AI model included in the fourth information.

A third aspect of this application provides a communication apparatus. The apparatus is a first communication apparatus. The apparatus includes a transceiver unit and a processing unit. The processing unit is configured to determine first information and second information. The transceiver unit is configured to send the first information. The first information indicates a correspondence between N communication parameters and M artificial intelligence AI models. Both N and M are positive integers. The transceiver unit further sends the second information. The second information is used to determine a first communication parameter among the N communication parameters. In the correspondence, the first communication parameter corresponds to a first AI model among the M AI models.

In the third aspect of this application, a composition module of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus is a second communication apparatus. The apparatus includes a transceiver unit and a processing unit. The transceiver unit is configured to receive first information and second information. The processing unit is configured to determine a correspondence between N communication parameters and M AI models based on the first information. Both N and M are positive integers. The processing unit is further configured to determine a first communication parameter among the N communication parameters based on the second information. In the correspondence, the first communication parameter corresponds to a first AI model among the M AI models.

In the fourth aspect of this application, a composition module of the communication apparatus may be further configured to: perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory. The memory is configured to store a program or instructions. The at least one processor is configured to execute the program or the instructions, to enable the apparatus to implement the method according to any one of the first aspect, the second aspect, or the possible implementations of the first aspect or the second aspect.

A sixth aspect of this application provides a communication apparatus, including at least one logic circuit and an input/output interface. The logic circuit is configured to perform the method according to any one of the first aspect, the second aspect, or the possible implementations of the first aspect or the second aspect.

A seventh aspect of this application provides a communication system. The communication system includes the foregoing first communication apparatus and second communication apparatus.

An eighth aspect of this application provides a computer-readable storage medium. The storage medium is configured to store one or more computer-executable instructions. When the computer-executable instructions are executed by a processor, the processor performs the method according to any one of the first aspect, the second aspect, or the possible implementations of the first aspect or the second aspect.

A ninth aspect of this application provides a computer program product (or referred to as a computer program). When a computer program in the computer program product is executed by a processor, the processor performs the method according to any one of the first aspect, the second aspect, or the possible implementations of the first aspect or the second aspect.

A tenth aspect of this application provides a chip system. The chip system includes at least one processor, configured to support a communication apparatus in implementing the method according to any one of the first aspect, the second aspect, or the possible implementations of the first aspect or the second aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit. The interface circuit provides program instructions and/or data for the at least one processor.

For technical effects brought by any design manner in the third aspect to the tenth aspect, refer to technical effects brought by different design manners in the first aspect and the second aspect. Details are not described herein again.

### BRIEF DESCRIPTION OF DRAWINGS

FIG. 1a to FIG. 1c are diagrams of communication systems according to this application;
FIG. 2a to FIG. 2g are diagrams of AI processing processes related to this application;
FIG. 3 is a diagram of interaction in a communication method according to this application;
FIG. 4a to FIG. 4c are diagrams of AI processing processes according to this application;
FIG. 5 and FIG. 6 are diagrams of interaction in a communication method according to this application; and
FIG. 7 to FIG. 11 are diagrams of communication apparatuses according to this application.

### DESCRIPTION OF EMBODIMENTS

First, some terms in embodiments of this application are explained and described, to facilitate understanding of a person skilled in the art.
(1) Terminal device: The terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X) communication, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) Network device: The network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes cooperate to assist a terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. A protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For correspondences between network elements in the ORAN system and protocol layer functions that may be implemented by the network elements, refer to Table 1.

**Table 1**

| ORAN network element | 3GPP protocol layer function |
|---|---|
| O-CU-CP | RRC+PDCP-control plane (PDCP-C) |
| O-CU-UP | SDAP+PDCP-user plane (PDCP-U) |
| O-DU | RLC+MAC+PHY-high |
| O-RU | PHY-low |

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next-generation network of the 5G network.

In embodiments of this application, the network device may alternatively be a network node having an AI capability, and may provide an AI service for a terminal or another network device, for example, may be an AI node, a computing capability node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used to describe the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source end at which the information is sent and the destination end, but the destination end may understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that for a transmitter of the indication information, the indication information may indicate the to-be-indicated information; and for a receiver of the indication information, the indication information may be for determining the to-be-indicated information.

In this application, unless otherwise specified, for same or similar parts of embodiments, mutual reference may be made between the embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined into a new embodiment, method, or implementation based on an internal logical relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

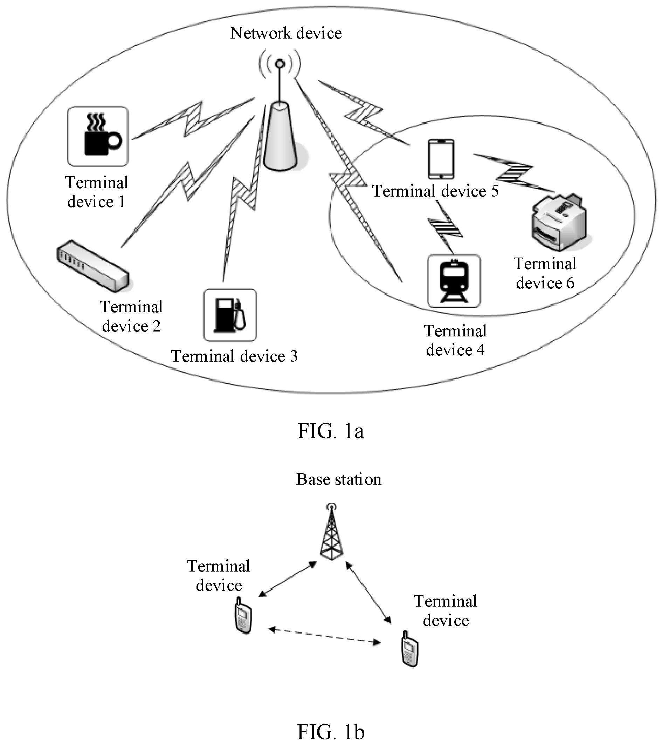

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

The communication system shown in FIG. 1a is used as an example. In addition to a communication-related service, an AI-related service may be performed between different devices (including between network devices, between a network device and a terminal device, and/or between terminal devices).

As shown in FIG. 1b, an example in which a network device is a base station is used. A communication-related service and an AI-related service may be performed between the base station and one or more terminal devices, and the communication-related service and the AI-related service may also be performed between different terminal devices.

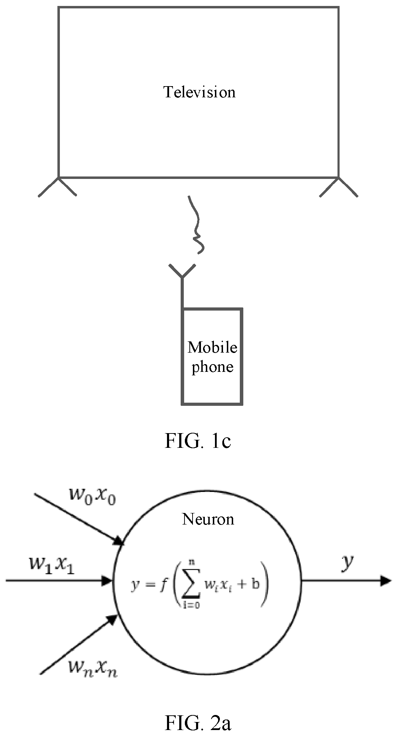

As shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in an access network device, a core network device, a cloud server, or a network management system (operation, administration and maintenance, OAM), to implement an AI-related function. The OAM may serve as a network management system of the core network device and/or as a network management system of the access network device. Alternatively, the AI network element may be an independently disposed network element in the communication system. Optionally, a terminal or a chip built in the terminal may alternatively include the AI entity, configured to implement the AI-related function.

The following briefly describes artificial intelligence (artificial intelligence, AI) that may be used in this application.

The artificial intelligence (artificial intelligence, AI) can enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. Learning tasks may be classified into a classification task and a regression task based on types of labels.

In terms of the unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of a "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

An idea of the neural network comes from a neuron structure of brain tissue. For example, each neuron performs a weighted summation operation on input values of the neuron, and outputs an operation result through an activation function.

FIG. 2a is a diagram of a neuron structure. It is assumed that an input of a neuron is *x =* [*x*₀, *x*₁, ... , *xₙ*], and a weight corresponding to each input is *w* = [*w*, *w*₁, ... , *wₙ*]. n is a positive integer. *wᵢ* and *xᵢ* may be of various possible types, such as a decimal, an integer (for example, 0, a positive integer, or a negative integer), or a complex number. *wᵢ* is used as a weight of *xᵢ,* and is used to weight *xᵢ.* A bias for performing weighted summation on the input values based on the weights is, for example, b. There may be a plurality of forms of the activation function. It is assumed that an activation function of a neuron is *y* = *f*(*z*) = max (0, *z*), and an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$ *.* For another example, an activation function of a neuron is y = *f*(*z*) = *z*, and an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$*.* b may be of various possible types, such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network. A quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

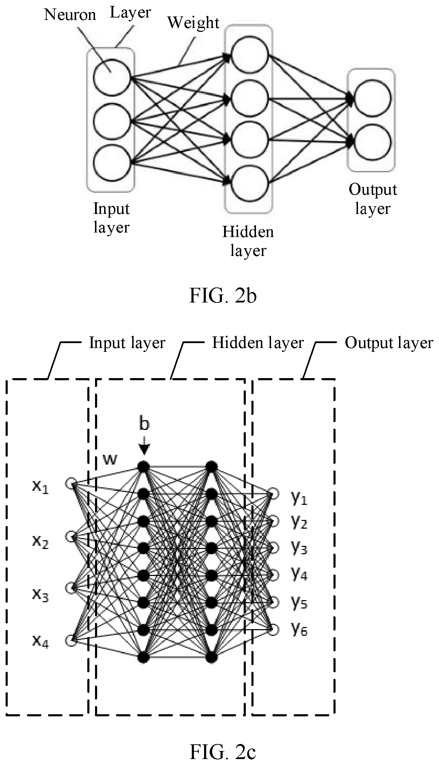

FIG. 2b is a diagram of an FNN. A feature of the FNN is that neurons at adjacent layers are completely connected to each other. Due to this feature, the FNN usually needs a large amount of storage space, resulting in high computational complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a constant size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: A part of or all parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (or referred to as model inference, inference, prediction, or the like), model monitoring or model verification, inference result release, or the like. The AI function may also be referred to as an AI (-related) operation or an AI-related function.

The following describes an example of an implementation process of a neural network with reference to the accompanying drawings.
1. Fully connected neural network: It is also referred to as a multilayer perceptron (multilayer perceptron, MLP).

As shown in FIG. 2c, one MLP includes one input layer (on the left), one output layer (on the right), and a plurality of hidden layers (in the middle). Each layer of the MLP includes a plurality of nodes, which are referred to as neurons. Neurons at two adjacent layers are connected to each other.

Optionally, in consideration of neurons at two adjacent layers, an output h of a neuron at a lower layer is a weighted sum of all neurons x at an upper layer that are connected to the neuron at the lower layer, and may be expressed as follows by using an activation function: $h = f \left(wx+b\right)$
w is a weight matrix. b is a bias vector. f is the activation function.

Further, optionally, an output of the neural network may be recursively expressed as follows: $y = {f}_{n} \left({w}_{n}{f}_{n - 1}\left(…\right)+{b}_{n}\right)$
n is an index of a neural network layer. 1 ≤ n ≤ N. N is a total quantity of layers of the neural network.

In other words, the neural network may be understood as a mapping relationship from an input dataset to an output dataset. Usually, the neural network is initialized randomly. A process of obtaining the mapping relationship from random w and b by using existing data is referred to as training of the neural network.

Optionally, a specific training manner is to evaluate an output result of the neural network by using a loss function (loss function).

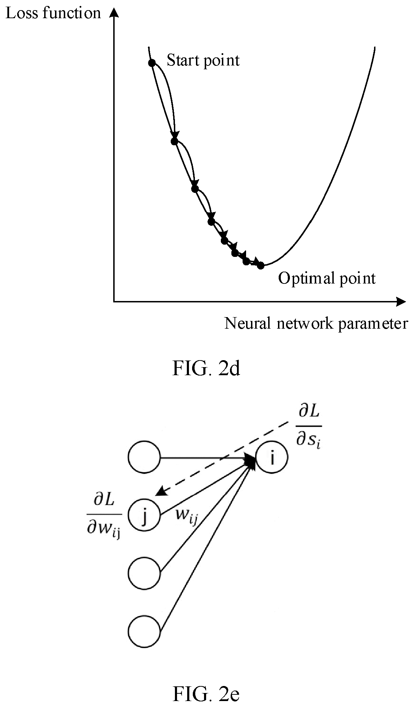

As shown in FIG. 2d, an error may be backpropagated, so that a neural network parameter (including ***w*** and ***b***) can be iteratively optimized through a gradient descent method until the loss function reaches a minimum value, namely, "a better point (for example, an optimal point)" in FIG. 2d. It may be understood that the neural network parameter corresponding to "the better point (for example, the optimal point)" in FIG. 2d may be used as a neural network parameter in trained AI model information.

Further, optionally, a gradient descent process may be expressed as follows: $θ ← θ - η \frac{\partial L}{\partial θ}$

***θ*** is a to-be-optimized parameter (including ***w*** and ***b***). L is a loss function. *η* is a learning rate, controlling a gradient descent step. ∂ represents a derivative operation. $\frac{\partial L}{\partial θ}$ represents a derivative of *L* with respect to ***θ***.

Further, optionally, in a backpropagation process, a chain rule for obtaining a partial derivative is used.

As shown in FIG. 2e, a gradient of a parameter at a previous layer may be obtained by recursive calculation of a gradient of a parameter at a next layer, and may be expressed as follows: $\frac{\partial L}{\partial {w}_{i j}} = \frac{\partial L}{\partial {s}_{i}} \frac{\partial {s}_{i}}{\partial {w}_{ij}}$
wᵢⱼ is a weight of connecting node j to node i. sᵢ is an input weighted sum on node i.

### 2. Federated learning (Federated Learning, FL):

A concept of the federated learning is proposed to effectively resolve difficulties faced by the current development of artificial intelligence. While ensuring user data privacy and security, the federated learning facilitates various edge devices and a server at a central end to collaborate to efficiently complete a learning task of a model.

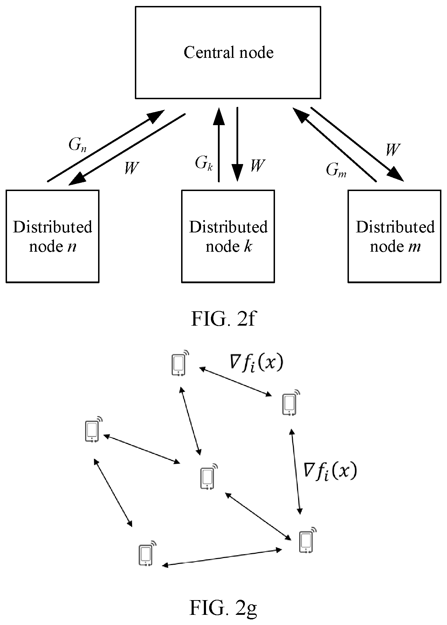

As shown in FIG. 2f, an FL architecture is a currently most widely used training architecture in the FL field. A FedAvg algorithm is a basic algorithm of FL. An algorithm procedure of the FedAvg algorithm is roughly as follows:
(1) The central end initializes a to-be-trained model ${w}_{g}^{0}$ and broadcasts and sends the model to all client devices.
(2) In a (*t* ∈ [1, *T*])^{th} round, a client *k* ∈ [1, *K*] performs *E* times of epoch training on a received global model ${w}_{g}^{t - 1}$ based on a local dataset 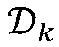 to obtain a local training result ${w}_{k}^{t}$, and reports the local training result to a central node.
(3) The central node summarizes and collects local training results from all (or some) clients. It is assumed that a set of clients that upload a local model in a *t*^{th} round is 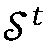 . The central end performs weighted averaging by using a quantity of samples of a corresponding client as a weight to obtain a new global model, and a specific update rule is ${w}_{g}^{t} = {\sum }_{k ∈ {S}^{t}} \frac{{D}_{k} {w}_{k}^{t}}{{\sum }_{k ∈ {S}^{t}} {D}_{k}}$. Then, the central end broadcasts and sends a global model ${w}_{g}^{t}$ of a latest version to all client devices for a new round of training.
(4) Steps (2) and (3) are repeated until the model converges finally or a quantity of training rounds reaches an upper limit.

In addition to reporting the local model ${w}_{k}^{t}$, a trained local gradient ${g}_{k}^{t}$ may also be reported. The central node averages the local gradient, and updates the global model based on a direction of the average gradient.

It can be learned that in an FL framework, a dataset exists on a distributed node. To be specific, the distributed node collects a local dataset, performs local training, and reports a local result (model or gradient) obtained through training to the central node. The central node does not have a dataset, is only responsible for fusing training results of distributed nodes to obtain a global model, and delivers the global model to the distributed nodes.

3. Decentralized learning: There is another distributed learning architecture: decentralized learning, which is different from federated learning.

As shown in FIG. 2g, a fully distributed system without a central node is considered. A design target (*x*) of a decentralized learning system is generally an average value of targets *fᵢ*(*x*) of all nodes, that is, $f \left(x\right) = \frac{1}{n} {\sum }_{i = 1}^{n} {f}_{i} \left(x\right)$ . *n* is a quantity of distributed nodes. *x* is a to-be-optimized parameter. In machine learning, *x* is a parameter of a machine learning (for example, neural network) model. Each node calculates a local gradient *∇fᵢ*(*x*) by using local data and the local target *fᵢ*(*x*), and then sends the local gradient to a neighboring node that is reachable in communication. After receiving gradient information sent by a neighboring node of any node, the node may update a parameter *x* of a local model based on the following formula: ${x}_{i}^{k + 1} = {x}_{i}^{k} - {α}_{k} \left(\frac{1}{\left|{N}_{i}\right|}{\sum }_{j ∈ {N}_{i}} ∇ {f}_{j} \left({x}_{j}^{k}\right)\right)$${x}_{i}^{k + 1}$ represents a parameter of a local model obtained after a (k + 1)^{th} (k is a natural number) update on node i. ${x}_{i}^{k}$ represents a parameter of a local model obtained after a k^{th} update on the i^{th} node (if k is 0, ${x}_{i}^{k}$ represents a parameter of a local model that does not participate in an update on the i^{th} node). αₖ represents an optimization coefficient. *Nᵢ* is a neighboring node set of node i. |*Nᵢ*| represents a quantity of elements in the neighboring node set of node i, namely, a quantity of neighboring nodes of node i. Through information exchange between nodes, the decentralized learning system finally learns a unified model.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example. The computing capability of the network device mainly provides computing capability support for a signal receiving and sending capability (for example, performs sending processing and receiving processing on a signal), to implement a communication task between the network device and another communication node.

In a communication network, in addition to providing computing capability support for the foregoing communication task by using the computing capability of the communication node, the communication node may further have a surplus computing capability. Therefore, how to use these computing capabilities is an urgent technical problem to be resolved.

In a possible implementation, a communication node may serve as a participating node of an AI learning system. A computing capability of the communication node is used in a phase of the AI learning system. With the advent of the large model era, deep learning models with massive parameters, such as bidirectional encoder representations from transformers (bidirectional encoder representations from transformers, BERT) and a generative pre-trained transformer (generative pre-trained transformer, GPT-2), can complete increasingly complex tasks and achieve better performance. However, for a large model, even an inference process of the model is limited by a device capacity. Therefore, the large model is usually stored on a central cloud server. In addition, each device in a network generates a large amount of raw data every day, and the data requires a plurality of calls to the large model for inference. Generally, the device (for example, a communication node) may send the data to the central server, the central server performs inference by using the data, and then the central server returns an inference result to the device. This process consumes a large amount of communication resources for data transmission, and privacy of device data is at risk.

To better reduce communication overheads and protect user data privacy, scholars have proposed a distributed inference technology for deep neural networks. Specifically, a model is distributed to a device, and a local computing capability of the device is used to infer the model, to reduce communication overheads and protect data privacy.

For example, a communication process between the central node and any distributed node in a federated learning scenario in FIG. 2f is used as an example. An AI model includes an AI submodel deployed on the central node and an AI submodel deployed on the any distributed node. Correspondingly, through the communication process between the two nodes, output data of one AI submodel can be used as input data of the other AI submodel, to implement an AI processing process in which a plurality of nodes participate. Alternatively, the AI model may be deployed on only one node, either the central node or the any distributed node, and input data of the AI model deployed on the node may include communication data of the other node. This can also implement an AI processing process in which a plurality of nodes participate.

For another example, a communication process between a distributed node and another distributed node in a decentralized learning scenario in FIG. 2g is used as an example. An AI model includes an AI submodel deployed on the distributed node and an AI submodel deployed on the another distributed node. Correspondingly, through the communication process between the two nodes, output data of one AI submodel can be used as input data of the other AI submodel, to implement an AI processing process in which a plurality of nodes participate. Alternatively, the AI model may be deployed on only one node, and input data of the AI model deployed on the node may include communication data of the other node. This can also implement an AI processing process in which a plurality of nodes participate.

However, in the foregoing implementation process, to improve flexibility of deploying AI models, one or more AI models may be deployed on a same node. Correspondingly, in a communication process, how the node and another node determine which AI model is currently used to perform AI processing is an urgent problem to be resolved.

To resolve the foregoing problem, this application provides a communication method and a related device, which can reduce overheads for indicating an AI model while enabling a computing capability of a communication node to be used for model processing on the AI model.

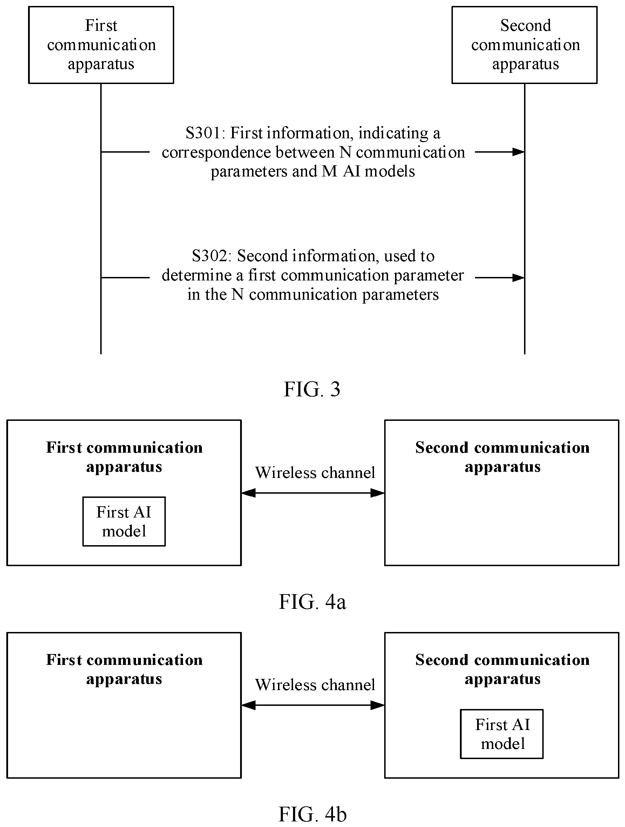

FIG. 3 is a diagram of an implementation of a communication method according to this application. The method includes the following steps.

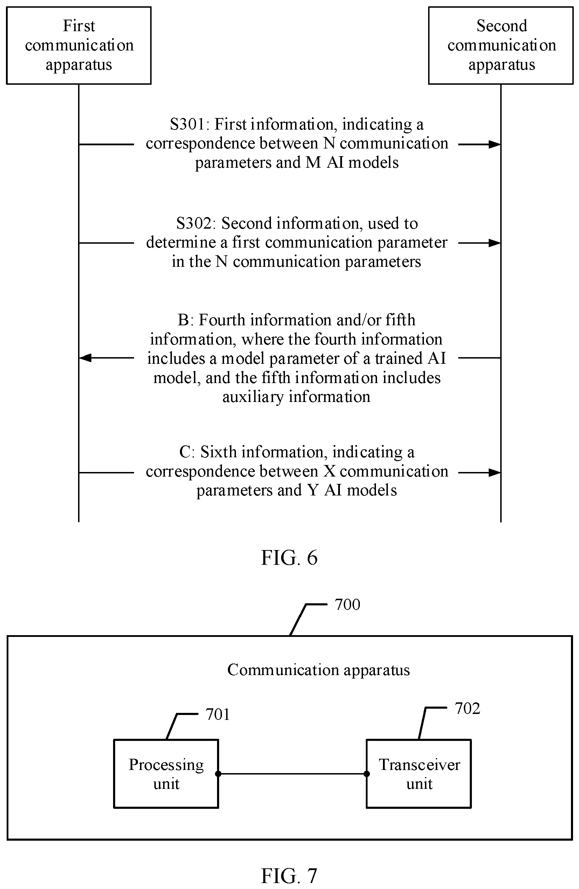

It should be noted that in FIG. 3, the method is illustrated by using an example in which a first communication apparatus and a second communication apparatus are used as execution bodies of interaction illustration. However, the execution bodies of the interaction illustration are not limited in this application. For example, in FIG. 3 and FIG. 6 below, an execution body of the method may be replaced with a chip, a chip system, a processor, a logic module, software, or the like in the communication apparatus. The first communication apparatus may be a network device, and the second communication apparatus may be a terminal device. Alternatively, both the first communication apparatus and the second communication apparatus are terminal devices (for example, the method may be applied to a communication process of different terminal devices in a sidelink communication scenario).

S301: The first communication apparatus sends first information. Correspondingly, the second communication apparatus receives the first information. The first information indicates a correspondence between N communication parameters and M AI models. Both N and M are positive integers.

It should be noted that the first information sent by the first communication apparatus in step S301 indicates the correspondence between the N communication parameters and the M AI models. For example, the first information may include model identifiers of the M AI models, model indexes of the M AI models, or the like. In addition, the first information may include identifiers of the N communication parameters, indexes of the N communication parameters, or the like. This can reduce overheads of the first information. Alternatively, the first information sent by the first communication apparatus in step S301 may include the N communication parameters and/or model parameters of the M AI models.

S302: The first communication apparatus sends second information. Correspondingly, the second communication apparatus receives the second information. The second information is used to determine a first communication parameter among the N communication parameters. In the correspondence, the first communication parameter corresponds to a first AI model among the M AI models.

It should be noted that the second information includes the first communication parameter among the N communication parameters, or the second information includes an index of the first communication parameter among the N communication parameters. When the second information includes the index of the first communication parameter among the N communication parameters, overheads for indicating the first communication parameter can be reduced.

In this application, terms such as "AI model", "neural network model", "AI neural network model", "machine learning model", and "AI processing model" may be used interchangeably.

It should be noted that the first communication parameter determined by using the second information sent by the first communication apparatus in step S302 may include one or more parameters among the N communication parameters. Correspondingly, the first AI model corresponding to the first communication parameter may include one or more AI models among the M AI models.

It should be noted that both N and M are positive integers, and a value relationship between N and M may have various implementations.

For example, when N is equal to M, the N communication parameters may be in a one-to-one correspondence with the M AI models.

For another example, when N is less than M, at least two AI models among the M AI models may be indicated by one of the N communication parameters. In other words, the first AI model corresponding to the first communication parameter determined by using the second information may be the at least two AI models (or any one of the at least two AI models). Optionally, the at least two AI models may be AI models with same or similar model structures, the at least two AI models may be AI models with same or similar model functions, or the like.

For another example, when N is greater than M, one of the M AI models may be indicated by at least two of the N communication parameters.

It should be understood that an AI model (for example, any one of the M AI models or any one of Y AI models below) in this application may be deployed in one or more communication apparatuses. Optionally, when the AI model is deployed in one communication apparatus, the AI model may be referred to as a single-end deployed AI model. When the AI model is deployed in a plurality of communication apparatuses, the AI model may be referred to as a dual-end/multi-end deployed AI model.

For example, the following describes a process of processing the AI model by using an example in which the AI model is the first AI model.

Implementation example 1: As shown in FIG. 4a, the first AI model may be deployed in the first communication apparatus. Input data of the first AI model may include data from the second communication apparatus. Correspondingly, after the second communication apparatus receives the first information and the second information that are sent by the first communication apparatus, the second communication apparatus may send data associated with the first AI model to the first communication apparatus, so that the first communication apparatus implements model processing on the first AI model based on the data associated with the first AI model. Model processing in this application may be understood as processing a model. The processing includes one or more of updating the model, training the model, inferring the model, selecting the model, switching the model, activating the model, deactivating the model, or identifying the model.

Implementation example 2: As shown in FIG. 4b, the first AI model may be deployed in the second communication apparatus. Correspondingly, after the second communication apparatus receives the first information and the second information that are sent by the first communication apparatus, the second communication apparatus may perform model processing on the first AI model.

Implementation example 3: The first AI model may include a first AI submodel and a second AI submodel. In other words, the first AI submodel and the second AI submodel may be different parts in a same AI model. For example, input data of the second AI submodel may include output data of the first AI submodel, or input data of the first AI submodel may include output data of the second AI submodel.

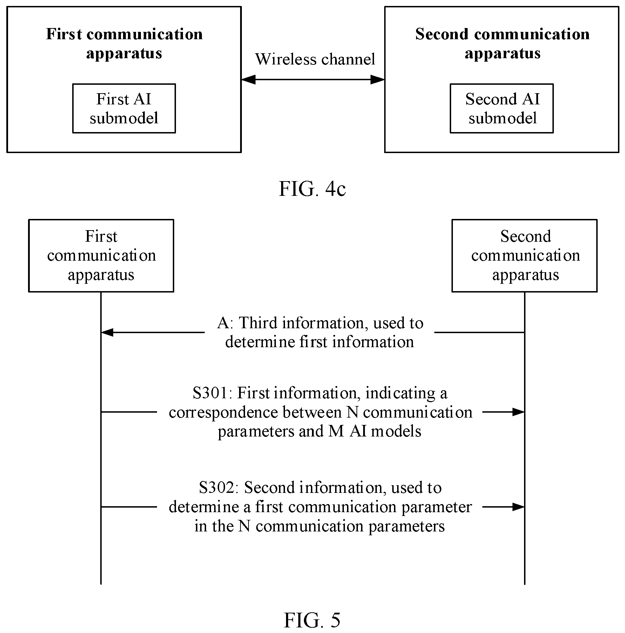

As shown in FIG. 4c, in the implementation example 3, for example, the first AI submodel is deployed in the first communication apparatus, the second AI submodel is deployed in the second communication apparatus, and the input data of the second AI submodel includes the output data of the first AI submodel. After the first communication apparatus indicates the first AI model through the first information and the second information, the first communication apparatus may send the output data of the first AI submodel to the second communication apparatus, and the second communication apparatus may use the output data of the first AI submodel as one piece of input data of the second AI submodel, and perform model processing on the second AI submodel.

Optionally, in the implementation example 3, in addition to the first AI submodel and the second AI submodel, the first AI model may further include another AI submodel. The another AI submodel may be deployed in a communication apparatus other than the first communication apparatus and the second communication apparatus. This is not limited herein.

It should be understood that a wireless communication signal may be transmitted (for example, receiving and sending of configuration information of a communication resource, or receiving and sending of a reference signal) between different communication apparatuses (the first communication apparatus and the second communication apparatus). An AI model (for example, any one of the M AI models or any one of the Y AI models below) in this application may be used to manage (including at least one of configuring, updating, or optimizing) the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, or an AI model used to replace one or more modules in a transmitter and/or a receiver. The following describes a plurality of implementations of the first AI model with reference to some implementation examples.

Implementation A: The first communication parameter includes a parameter associated with modulation and demodulation, and the first AI model includes an AI model used for modulation and/or demodulation.

In the implementation A, the first communication parameter determined by using the second information may include the parameter associated with modulation and demodulation. Correspondingly, in the correspondence, the first AI model corresponding to the first communication parameter may include the AI model used for modulation and/or demodulation. In this way, the AI model used for modulation and/or demodulation can be indicated while the parameter associated with modulation and demodulation is indicated, so that the second communication apparatus can subsequently participate in, based on the parameter associated with modulation and demodulation, model processing on the AI model used for modulation and/or demodulation.

Optionally, in the implementation A, in the AI model used for modulation and/or demodulation, if the AI model is used for modulation, input data of the AI model may include a bit stream, and output data obtained after the bit stream is processed by the AI model may include a modulation symbol. In addition, if the AI model is used for demodulation, input data of the AI model may include a noisy symbol, and output data obtained after the bit stream is processed by the AI model may include a log-likelihood ratio.

Optionally, the AI model used for modulation and/or demodulation may be referred to as an intelligent modulation model, an intelligent demodulation model, an intelligent modulation and demodulation model, or the like.

Optionally, the parameter associated with modulation and demodulation includes one or more of the following: a modulation and coding scheme (modulation and coding scheme, MCS), a frequency domain resource indication, a transmit power control command (transmit power control command, TPC command), or a transmitted precoding matrix indicator (transmitted precoding matrix indicator, TPMI).

The following describes the implementation A by using an example in which the parameter associated with modulation and demodulation includes the MCS and N is equal to M.

Example 1: As shown in the implementation example 1 in FIG. 4a above, when the first AI model is deployed in the first communication apparatus, the first information in step S301 may indicate the correspondence between the N communication parameters and the M AI models through Table 2.

**Table 2**

| N MCS indexes (indexes) | AI model identifiers (Model IDs) of the M AI models deployed in the first communication apparatus |
|---|---|
| 0 | 0 |
| 1 | 1 |
| 2 | 2 |
| ... | ... |

In other words, in step S302, the second information may include an index in the indexes of the N MCSs, so that the second communication apparatus determines, based on Table 2, an AI model identifier corresponding to the index, and determines, as the first AI model, an AI model indicated by the AI model identifier.

Example 2: As shown in the implementation example 2 in FIG. 4b above, when the first AI model is deployed in the second communication apparatus, the first information in step S301 may indicate the correspondence between the N communication parameters and the M AI models through Table 3.

**Table 3**

| N MCS indexes (indexes) | AI model identifiers (Model IDs) of the M AI models deployed in the second communication apparatus |
|---|---|
| 0 | 0 |
| 1 | 1 |
| 2 | 2 |
| ... | ... |

Similarly, in step S302, the second information may include an index in the indexes of the N MCSs, so that the second communication apparatus determines, based on Table 3, an AI model identifier corresponding to the index, and determines, as the first AI model, an AI model indicated by the AI model identifier.

Example 3: As shown in the implementation example 3 in FIG. 4c above, when the first AI model includes the first AI submodel and the second AI submodel, the first AI submodel is deployed in the first communication apparatus, and the second AI submodel is deployed in the second communication apparatus, the first information in step S301 may indicate the correspondence between the N communication parameters and the M AI models through Table 4.

**Table 4**

| N MCS indexes (indexes) | AI model identifiers (Model IDs) of first AI submodels of the M AI models deployed in the first communication apparatus | AI model identifiers (Model IDs) of second AI submodels of the M AI models deployed in the second communication apparatus |
|---|---|---|
| 0 | 0 | 10 |
| 1 | 1 | 11 |
| 2 | 2 | 12 |
| ... | ... | ... |

Similarly, in step S302, the second information may include an index in the indexes of the N MCSs, so that the second communication apparatus determines, based on Table 4, an AI model identifier of a first AI submodel and an AI model identifier of a second AI submodel that correspond to the index, and further determines the first AI submodel and the second AI submodel based on the two identifiers.

Optionally, in Table 4, an example in which quantities of the first AI submodels and the second AI submodels are both M is used. In this case, the AI model identifier of the first AI submodel may be different from the AI model identifier of the second AI submodel. For example, in Table 4, when the index is 0 among the N MCSs, the AI model identifier of the first AI submodel is "0", and the AI model identifier of the second AI submodel is "10". It should be noted that Table 4 is merely an implementation example. When the quantities of the first AI submodels and the second AI submodels are both M, the AI model identifier of the first AI submodel may be the same as the AI model identifier of the second AI submodel, or the AI model identifier of the first AI submodel and the AI model identifier of the second AI submodel may be represented through a same field. This is not limited herein.

Optionally, during actual application, one of the quantities of the first AI submodels and the second AI submodels is M, and the other may be K. K may be different from M.

For example, the quantity of the first AI submodels is M, and the quantity of the second AI submodels is K. When K is greater than M, the second communication apparatus may determine a first AI submodel based on Table 4, and determine, based on Table 4, two or more second AI submodels corresponding to the first AI submodel. Then, the second communication apparatus may select one of the two or more second AI submodels to perform subsequent model processing. When K is less than M, the second communication apparatus may determine a first AI submodel based on Table 4, and determine, based on Table 4, a second AI submodel corresponding to the first AI submodel.

It may be understood that in an implementation process of the implementation A, the first communication apparatus may perform step S302 a plurality of times, so that an AI model on which the second communication apparatus performs model processing is switched as the MCS changes.

Optionally, the MCS may change based on a change in a channel measurement result of the first communication apparatus, or the MCS may be adjusted based on adaptive modulation and coding (adjusted modulation and coding, AMC). This is not limited herein.

Implementation B: The first communication parameter includes configuration information of a reference signal, and the first AI model includes an AI model used for channel prediction.

In the implementation B, the first communication parameter determined by using the second information may include the configuration information of the reference signal. Correspondingly, in the correspondence, the first AI model corresponding to the first communication parameter may include the AI model used for channel prediction. In this way, the AI model used for channel prediction can be indicated while the configuration information of the reference signal is indicated. Because receiving and sending of the reference signal configured based on the configuration information of the reference signal is associated with a channel prediction process, in this manner, the second communication apparatus can subsequently participate in, based on the reference signal transmitted based on the configuration information of the reference signal, model processing on the AI model used for channel prediction.

Optionally, in the implementation B, in the AI model used for channel prediction, input data of the AI model may include low-dimensional channel information, and output data obtained after the low-dimensional channel information is processed by the AI model may include high-dimensional channel information. A channel dimension may include at least one of a time domain dimension, a spatial domain dimension, or a frequency domain dimension.

Optionally, in the implementation B, in the AI model used for channel prediction, input data of the AI model may include a pilot signal (or referred to as a reference signal), and output data obtained after the pilot signal is processed by the AI model may include channel information.

Optionally, the AI model used for channel prediction may be referred to as a channel estimation model, a channel prediction model, a channel simulation and recovery model, a channel reconstruction model, a channel obtaining model, a channel inference model, or the like.

Optionally, the configuration information of the reference signal includes at least one of the following: time domain configuration information, frequency domain configuration information, spatial domain configuration information, port information, periodicity information, or codebook configuration information.

It may be understood that in an implementation process of the implementation B, the first communication apparatus may perform step S302 a plurality of times, so that an AI model on which the second communication apparatus performs model processing is switched as the configuration information of the reference signal changes (or the reference signal is reconfigured).

Implementation C: The first communication parameter includes a parameter associated with beam management, and the first AI model includes an AI model used for beam management.

In the implementation C, the first communication parameter determined by using the second information may include the parameter associated with beam management. Correspondingly, in the correspondence, the first AI model corresponding to the first communication parameter may include the AI model used for beam management. In this way, the AI model used for beam management can be indicated while the parameter associated with beam management is indicated, so that the second communication apparatus can subsequently participate in, based on the parameter associated with beam management, model processing on the AI model used for beam management.

Optionally, in the implementation C, in the AI model used for beam management, input data of the AI model may include measurement results of A beams, and output data obtained after the measurement results of the A measurement beams are processed by the AI model may include indexes or identifiers of B beams. B is a positive integer. A is an integer greater than B.

Optionally, the AI model used for beam management may be referred to as a beam management model, a beam optimization model, or the like.

Optionally, the parameter associated with beam management includes at least one of the following: channel characteristic information of a cell, or quantity information of beams associated with the AI model used for beam management. The quantity information of the beams associated with the AI model used for beam management may include a quantity of input measurement beams (for example, a quantity "A" of measurement beams input to the AI model in the foregoing example) and/or a quantity of output candidate beams (for example, a quantity "B" of beams whose indexes or identifiers are output by the AI model in the foregoing example).

It should be understood that when the second communication apparatus is a terminal device, the terminal device may communicate with different cells. Generally, communication beams between the different cells and the terminal device are different. Therefore, the channel characteristic information of the cell can be used for beam management. The channel characteristic information of the cell may include one or more of a transmit/receive beam configuration, an antenna configuration of the first communication apparatus/second communication apparatus, an antenna radiation pattern of the first communication apparatus/second communication apparatus, interference information, a signal-to-interference-plus-noise ratio, or RSRP distribution.

It should be noted that in the foregoing implementation B and implementation C, for a correspondence between the first communication parameter and the first AI model, refer to the foregoing description of the implementation A.

Optionally, any two or all three of the foregoing implementation A, implementation B, and implementation C may be combined. The following uses an example in which all three of them are combined for description with reference to an implementation shown in Table 5.

Example 4: As shown in the implementation example 1 in FIG. 4a above, when the first AI model is deployed in the first communication apparatus, the first information in step S301 may indicate the correspondence between the N communication parameters and the M AI models through Table 5.

**Table 5**

| N MCS indexes (indexes) | AI model identifiers (Model IDs) of the M AI models deployed in the first communication apparatus |
|---|---|
| MCS 0 index | 0 |
| MCS 1 index | 1 |
| Index of configuration information 0 of a reference signal | 2 |
| Index of configuration information 1 of a reference signal | 3 |
| Index of quantity information 0 of input measurement results | 4 |
| Index of quantity information 1 of input measurement results | 5 |
| ... | ... |

In other words, in step S302, the second information may include an index in the N indexes. In addition, the N indexes include indexes of parameters in the implementation A (namely, the index of the MCS 0 and the index of the MCS 1 in Table 5), indexes of parameters in the implementation B (the index of the configuration information 0 of the reference signal and the index of the configuration information 1 of the reference signal), and indexes of parameters in the implementation B (the index of the quantity information 0 of the input measurement results and the index of the quantity information 1 of the input measurement results). In this way, the second communication apparatus determines, based on Table 5, an AI model identifier corresponding to the index, and determines, as the first AI model, an AI model indicated by the AI model identifier.

It may be understood that Table 5 may be an extended implementation of Table 2 above. Similarly, implementations in Table 3 and Table 4 above may also be extended with reference to the implementation in Table 5.

In a possible implementation, in the method shown in FIG. 3, after step S302, the method further includes: The first communication apparatus receives or sends AI data of the first AI model. Specifically, after the first communication apparatus sends the second information to indicate the first AI model, the AI data of the first AI model may be further exchanged between the first communication apparatus and the second communication apparatus, to implement model processing on the first AI model through the AI data.

Optionally, that the first communication apparatus (or the second communication apparatus) receives or sends the AI data of the first AI model includes: The first communication apparatus receives or sends the AI data of the first AI model based on the first communication parameter. Specifically, the first communication apparatus (or the second communication apparatus) may receive or send the AI data of the first AI model based on the first communication parameter determined by using the second information. In this way, model processing on the AI model can be implemented through the communication parameter indicated by the second information while the second information can indicate the first communication parameter and the first AI model.

Based on the technical solution in FIG. 3, after the first communication apparatus sends the first information indicating the correspondence between the N communication parameters and the M AI models in step S301, the first communication apparatus may further send the second information used to determine the first communication parameter among the N communication parameters in step S302. In the correspondence, the first communication parameter corresponds to the first AI model among the M AI models. In other words, the first communication apparatus may indicate the first AI model via the correspondence indicated by the first information and the first communication parameter indicated by the second information, so that a receiver of the first information and the second information can subsequently perform processing based on the first AI model. Therefore, when a communication apparatus in a communication system serves as an AI participating node, a computing capability of the communication apparatus can be used for AI processing, and an implementation in which an AI model is indicated by reusing an indication of a communication parameter can also reduce overheads for indicating the AI model.

In a possible implementation of the technical solution shown in FIG. 3, before step S301, the second communication apparatus may further send capability information to the first communication apparatus. The following provides descriptions based on a solution shown in FIG. 5.

As shown in FIG. 5, in comparison with the technical solution shown in FIG. 3, before the first communication apparatus sends the first information, the method further includes:
Step A: The second communication apparatus sends third information. Correspondingly, the first communication apparatus receives the third information. The third information indicates K AI models supported by the second communication apparatus.

Optionally, at least one of the M AI models is the same as at least one of the K AI models.

Optionally, the third information includes identifiers or indexes of the K AI models. This can reduce overheads of the third information.

Based on an implementation process of step A, the first communication apparatus may further receive the third information indicating the K AI models supported by the second communication apparatus. Subsequently, the first communication apparatus may determine the first information based on the third information. In this way, the M AI models indicated by the first information can maximally match a capability supported by the second communication apparatus, to improve a success rate of model processing on the M AI models.

Optionally, after the first communication apparatus receives the third information, the first communication apparatus may use, as a basis for determining the first information, at least one of the K AI models indicated by the third information, or when the first communication apparatus determines that the K AI models are not applicable, the first communication apparatus may not need to use the third information as a basis for determining the first information.

In a possible implementation, the M AI models are included in the K AI models. In other words, the M AI models indicated by the first information may be included in the K AI models indicated by the third information, so that the M AI models indicated by the first information can match the capability supported by the second communication apparatus, to improve the success rate of model processing on the M AI models.

In a possible implementation, P AI models among the M AI models are different from the K AI models. P is a positive integer. The first information includes model parameters of the P AI models. Specifically, the P AI models among the M AI models indicated by the first information may be different from the K AI models indicated by the third information, and the first information may include the model parameters of the P AI models, so that the second communication apparatus can obtain, through the first information, the model parameters of the P AI models other than the supported K AI models indicated by the third information. This can improve flexibility of indicating the M AI models through the second information.

Optionally, a value relationship between P and K is not limited. For example, P is less than K, P is equal to K, or P is greater than K.

Optionally, when the P AI models among the M AI models are different from the K AI models, the model parameters of the P AI models may alternatively be carried in information other than the first information. This is not limited herein. In other words, the first information may not include the model parameters of the P AI models.

In a possible implementation of the technical solution shown in FIG. 3, after the first communication apparatus sends the indicated correspondence between the communication parameters and the AI models in step S301, the second communication apparatus may further send some information to the first communication apparatus, so that the first communication apparatus updates/optimizes the correspondence based on the information. The following provides descriptions based on a solution shown in FIG. 6.

As shown in FIG. 6, in comparison with the technical solution shown in FIG. 3, after the first communication apparatus sends the first information, the method further includes:
Step B: The second communication apparatus sends fourth information and/or fifth information. Correspondingly, the first communication apparatus receives the fourth information and/or the fifth information. The fourth information includes a model parameter of a trained AI model. The fifth information includes auxiliary information.
Step C: The first communication apparatus sends sixth information. Correspondingly, the second communication apparatus receives the sixth information. The sixth information indicates a correspondence between X communication parameters and Y AI models. The correspondence between the X communication parameters and the Y AI models is determined based on the fourth information and/or the fifth information. Both X and Y are positive integers.

It should be noted that both X and Y are positive integers, and a value relationship between X and Y may have various implementations.

For example, when X is equal to Y, the X communication parameters may be in a one-to-one correspondence with the Y AI models.

For another example, when X is less than Y, at least two AI models in the Y AI models may be indicated by one of the X communication parameters. In other words, the first AI model corresponding to the first communication parameter determined by using the second information may be the at least two AI models (or any one of the at least two AI models). Optionally, the at least two AI models may be AI models with same or similar model structures, the at least two AI models may be AI models with same or similar model functions, or the like.

For another example, when X is greater than Y, one of the Y AI models may be indicated by at least two of the X communication parameters.

It should be understood that the sixth information indicates the correspondence between the X communication parameters and the Y AI models, and the first information above indicates the correspondence between the N communication parameters and the M AI models. For an implementation process of the sixth information, refer to an implementation process of the first information above. For example, for the correspondence indicated by the sixth information, refer to an implementation process of any one of Table 2 to Table 5 above.

Optionally, the Y AI models may be partially or completely the same as the M AI models. For example, when the Y AI models are completely the same as the M AI models, a difference between the sixth information and the first information lies in that the first information indicates the correspondence between the N communication parameters and the AI models, and the sixth information indicates the correspondence between the X communication parameters and the AI models. In other words, the X communication parameters may be different from the N communication parameters. For another example, when the Y AI models are partially the same as the M AI models, Z AI models in the Y AI modules may be different from the M AI models. In addition, the Z AI models may be obtained based on the fourth information and/or the fifth information, or the Z AI models may be generated based on local data of the first communication apparatus. This is not limited herein.

Based on the technical solution shown in FIG. 6, the first communication apparatus may receive the fourth information including the model parameter of the trained AI model, and/or the first communication apparatus may receive the fifth information including the auxiliary information, so that the first communication apparatus may determine the correspondence between the X communication parameters and the Y AI models based on the fourth information and/or the fifth information, and indicate the correspondence through the sixth information. In other words, the first communication apparatus may update the correspondence between the communication parameters and the AI models through the fourth information and/or the fifth information, and indicate an updated correspondence.

Optionally, the auxiliary information is used to generate/train/reinforce/select/switch/update an AI model, to obtain the Y AI models. In other words, the auxiliary information may include at least one of auxiliary information for training the AI model, training data of the AI model, auxiliary information for collecting the training data of the AI model, and auxiliary information for inferring the AI model.

Optionally, the sixth information includes model identifiers of the Y AI models. This can reduce overheads of the sixth information.

Optionally, the auxiliary information includes at least one of the following: cell information, a cell configuration, distribution of the first communication apparatus and/or the second communication apparatus, a speed of the first communication apparatus and/or the second communication apparatus, a channel power delay profile, configuration information of the first communication apparatus and/or the second communication apparatus, an antenna configuration of the first communication apparatus and/or the second communication apparatus, a beam configuration of the first communication apparatus and/or the second communication apparatus, an antenna radiation pattern of the first communication apparatus and/or the second communication apparatus, interference information, a signal-to-(interference-plus-)noise ratio, an MCS, a channel rank (rank), a data error, data quality, a resource granularity, maximum signal quality information (for example, the signal quality information may include one or more of a received signal strength indication (received signal strength indication, RSSI), a reference signal received power (reference signal received power, RSRP), or reference signal received quality (reference signal received quality, RSRQ)), or location information.

Optionally, the trained AI model may be obtained through training based on the first AI model, or may be obtained by the second communication apparatus through training based on another AI model (the another AI model may be one of the M AI models, or may not belong to the M AI models). This is not limited herein. For example, the first communication apparatus and/or the second communication apparatus may continue training (or perform retraining) based on the first AI model. For example, if model performance of an AI model obtained through continued training is higher than a threshold, a trained first AI model may be used as a basis for determining the fourth information. For another example, if the model performance of the AI model obtained through continued training is lower than the threshold, the trained first AI model may not be used as a basis for determining the fourth information, and training is performed based on another model or retraining is performed with a random parameter, to obtain the model parameter of the trained AI model included in the fourth information.

It may be understood that as described above, an AI model (for example, any one of the M AI models or any one of the Y AI models) in this application may be used to manage (including at least one of configuring, updating, or optimizing) a wireless communication signal. Correspondingly, the auxiliary information may include a parameter related to the management of the wireless communication signal. The following provides some examples for description.

In an implementation example, if the M AI models indicated by the first information include a model (denoted as a second AI model for ease of reference) used for modulation and/or demodulation, the Y AI models indicated by the sixth information may include a third AI model, and the third AI model is also used for modulation and/or demodulation. The third AI model may be obtained by performing processing (for example, model update or model optimization) on the second AI model based on the fourth information and/or the fifth information. For example, in this case, the auxiliary information included in the fifth information may include one or more of a beam configuration, an MCS, a signal-to-interference-plus-noise ratio, a channel power delay profile, capability information of the second communication apparatus, or hardware configuration information of the second communication apparatus.

In an implementation example, if the M AI models indicated by the first information include a model (denoted as a second AI model for ease of reference) used for channel prediction, the Y AI models indicated by the sixth information may include a third AI model, and the third AI model is also used for channel prediction. The third AI model may be obtained by performing processing (for example, model update or model optimization) on the second AI model based on the fourth information and/or the fifth information. For example, in this case, the auxiliary information included in the fifth information may include one or more of a beam configuration, an MCS, a channel power delay profile, an antenna configuration, an antenna radiation pattern, a signal-to-interference-plus-noise ratio, interference information, a channel rank, data quality, or a resource granularity.

In an implementation example, if the M AI models indicated by the first information include a model (denoted as a second AI model for ease of reference) used for beam management, the Y AI models indicated by the sixth information may include a third AI model, and the third AI model is also used for beam management. The third AI model may be obtained by performing processing (for example, model update or model optimization) on the second AI model based on the fourth information and/or the fifth information. For example, in this case, the auxiliary information included in the fifth information may include one or more of a beam configuration, an antenna configuration, an antenna radiation pattern, interference information, a signal-to-interference-plus-noise ratio, maximum signal quality information, a quantity of beam sampling times, location information, or map information.

With reference to FIG. 7, an embodiment of this application provides a communication apparatus 700. The communication apparatus 700 may implement functions of the second communication apparatus or the first communication apparatus in the foregoing method embodiments, and therefore may also implement beneficial effects of the foregoing method embodiments. In this embodiment of this application, the communication apparatus 700 may be the first communication apparatus (or the second communication apparatus), or may be an integrated circuit, an element, or the like in the first communication apparatus (or the second communication apparatus), for example, a chip.

It should be noted that a transceiver unit 702 may include a sending unit and a receiving unit, which are respectively configured to perform sending and receiving.

In a possible implementation, when the apparatus 700 is configured to perform the method performed by the first communication apparatus in the foregoing embodiments, the apparatus 700 includes a processing unit 701 and the transceiver unit 702. The processing unit 701 is configured to determine first information and second information. The transceiver unit 702 is configured to send the first information. The first information indicates a correspondence between N communication parameters and M AI models. Both N and M are positive integers. The transceiver unit 702 further sends the second information. The second information is used to determine a first communication parameter among the N communication parameters. In the correspondence, the first communication parameter corresponds to a first AI model among the M AI models.

In a possible implementation, when the apparatus 700 is configured to perform the method performed by the second communication apparatus in the foregoing embodiments, the apparatus 700 includes a processing unit 701 and the transceiver unit 702. The transceiver unit 702 is configured to receive first information and second information. The processing unit 701 is configured to determine a correspondence between N communication parameters and M AI models based on the first information. Both N and M are positive integers. The processing unit 701 is further configured to determine a first communication parameter among the N communication parameters based on the second information. In the correspondence, the first communication parameter corresponds to a first AI model among the M AI models.

It should be noted that for details of content such as an information execution process of the unit of the communication apparatus 700, refer to descriptions in the foregoing method embodiments of this application. Details are not described herein again.

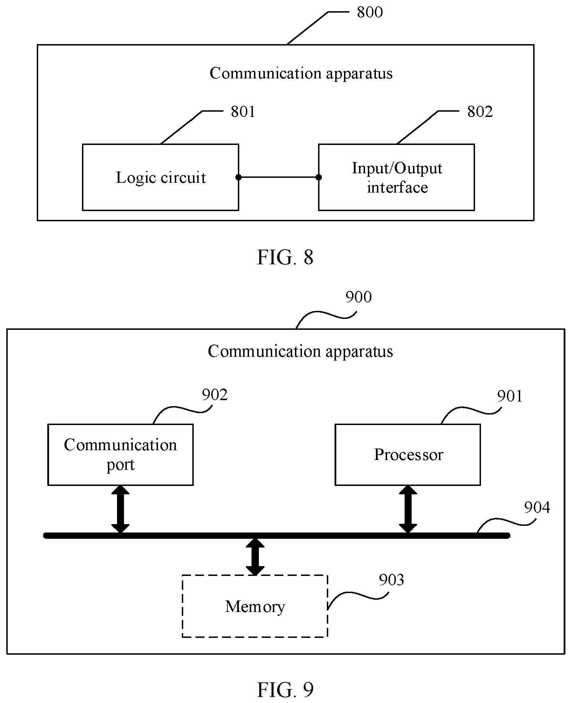

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine first information and second information. The input/output interface 802 is configured to send the first information. The first information indicates a correspondence between N communication parameters and M artificial intelligence AI models. Both N and M are positive integers. The input/output interface 802 further sends the second information. The second information is used to determine a first communication parameter among the N communication parameters. In the correspondence, the first communication parameter corresponds to a first AI model among the M AI models.

Optionally, the input/output interface 802 is configured to receive first information and second information. The logic circuit 801 is configured to determine a correspondence between N communication parameters and M AI models based on the first information. Both N and M are positive integers. The logic circuit 801 is further configured to determine a first communication parameter among the N communication parameters based on the second information. In the correspondence, the first communication parameter corresponds to a first AI model among the M AI models.

The logic circuit 801 and the input/output interface 802 may further perform other steps performed by the first communication apparatus or the second communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by software. A part or all of functions of the processing apparatus may be implemented by software.

Optionally, the processing apparatus may include a memory and a processor. The memory is configured to store a computer program. The processor reads and executes the computer program stored in the memory, to perform corresponding processing and/or steps in any one of the method embodiments.

Optionally, the processing apparatus may include only a processor. A memory configured to store a computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), systems on chips (systems on chips, SoCs), central processing units (central processing units, CPUs), network processors (network processors, NPs), digital signal processing circuits (digital signal processors, DSPs), microcontrollers (micro controller units, MCUs), programmable controllers (programmable logic devices, PLDs), or other integrated chips, or any combination of the foregoing chips or processors.

FIG. 9 shows a communication apparatus 900 used in the foregoing embodiments according to an embodiment of this application. The communication apparatus 900 may be specifically a communication apparatus serving as a terminal device in the foregoing embodiments. In the example shown in FIG. 9, the terminal device is implemented by using a terminal device (or a component in a terminal device).

In a possible diagram of a logical structure of the communication apparatus 900, the communication apparatus 900 may include but is not limited to at least one processor 901 and a communication port 902.

The transceiver unit 702 shown in FIG. 7 may be a communication interface. The communication interface may be the communication port 902 in FIG. 9. The communication port 902 may include an input interface and an output interface. Alternatively, the communication port 902 may be a transceiver circuit, and the transceiver circuit may include an input interface circuit and an output interface circuit.

Further, optionally, the apparatus may include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field-programmable gate array or another programmable logic device, a transistor logic device, a hardware component, or any combination thereof. The processor 901 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that for the purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement the steps implemented by the terminal device in the foregoing method embodiments, and achieve the technical effects corresponding to the terminal device. For a specific implementation of the communication apparatus shown in FIG. 9, refer to the descriptions in the foregoing method embodiments. Details are not described herein again.

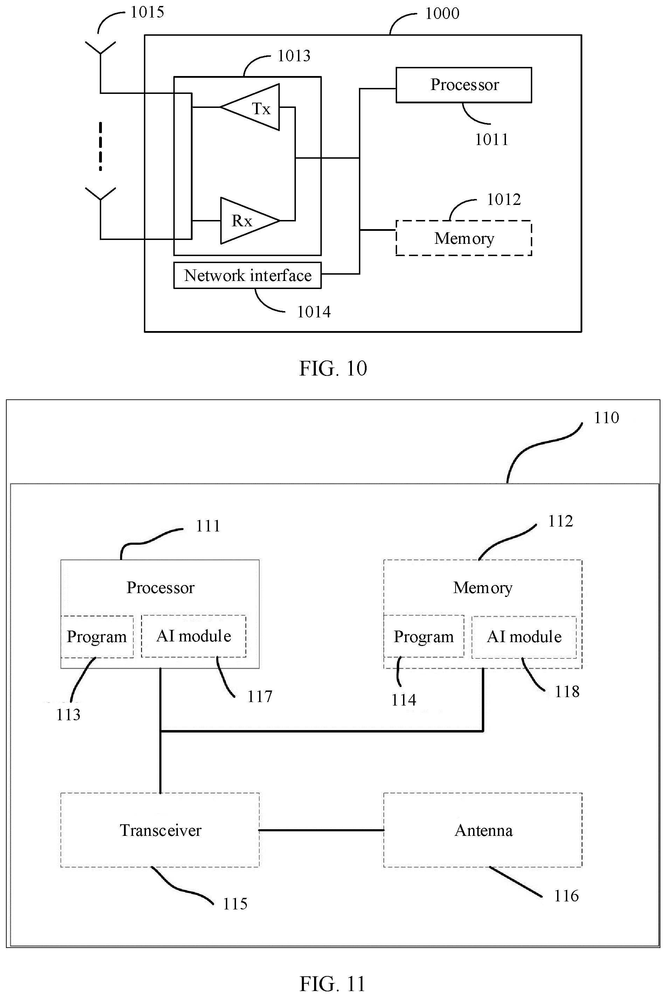

FIG. 10 is a diagram of a structure of a communication apparatus 1000 used in the foregoing embodiments according to an embodiment of this application. The communication apparatus 1000 may be specifically a communication apparatus serving as a network device in the foregoing embodiments. In the example shown in FIG. 10, the network device is implemented by using a network device (or a component in a network device). For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface. The communication interface may be the network interface 1014 in FIG. 10. The network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing the technical solutions in embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal. The transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes the digital baseband signal or the digital intermediate frequency signal, for example, performs demodulation and decoding. In addition, the transmitter Tx of the transceiver 1013 is further configured to receive a modulated digital baseband signal or digital intermediate frequency signal from the processor 1011, converts the modulated digital baseband signal or digital intermediate frequency signal into a radio frequency signal, and sends the radio frequency signal through the one or more antennas 1015. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. A sequence of the up frequency mixing and the digital-to-analog conversion is adjustable. The digital baseband signal and the digital intermediate frequency signal may be collectively referred to as a digital signal.

The transceiver 1013 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 1000 shown in FIG. 10 may be specifically configured to implement the steps implemented by the network device in the foregoing method embodiments, and achieve the technical effects corresponding to the network device. For a specific implementation of the communication apparatus 1000 shown in FIG. 10, refer to the descriptions in the foregoing method embodiments. Details are not described herein again.

FIG. 11 is a diagram of a structure of a communication apparatus used in the foregoing embodiments according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, a RAN node, a terminal, or a chip), execute a software program, and process data of the software program.

Optionally, in a design, the processor 111 may include a program 113 (which may also be referred to as code or instructions sometimes). The program 113 may be run on the processor 111, so that the communication apparatus 110 performs the method described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, so that the communication apparatus 110 performs the method described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 sometimes may also be referred to as a processing unit, and controls the communication apparatus (for example, the RAN node or the terminal). The transceiver 115 sometimes may also be referred to as a transceiver unit, a transceiver machine, a transceiver circuit, a transceiver device, or the like, and is configured to implement a transceiver function of the communication apparatus through the antenna 116.

The processing unit 701 shown in FIG. 7 may be the processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (or referred to as a computer program). When the computer program product is executed by a processor, the processor performs the method in the foregoing possible implementations of the first communication apparatus or the second communication apparatus.

An embodiment of this application further provides a chip system. The chip system includes at least one processor, configured to support a communication apparatus in implementing a function in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first communication apparatus or the second communication apparatus in the foregoing method embodiments.

An embodiment of this application further provides a communication system. The network system architecture includes the first communication apparatus and the second communication apparatus in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes a plurality of instructions for instructing a computer device (which may be a personal computer, a server, a network device, or the like) to perform all or a part of the steps in the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
sending first information, wherein the first information indicates a correspondence between N communication parameters and M artificial intelligence AI models, and both N and M are positive integers; and
sending second information, wherein the second information is used to determine a first communication parameter among the N communication parameters; and in the correspondence, the first communication parameter corresponds to a first AI model among the M AI models.

2. The method according to claim 1, wherein the method further comprises:
receiving or sending AI data of the first AI model.

3. The method according to claim 1 or 2, wherein before the sending the first information, the method further comprises:
receiving third information, wherein the third information indicates K AI models supported by a second communication apparatus; wherein
the M AI models are comprised in the K AI models; or
P AI models among the M AI models are different from the K AI models, wherein P is a positive integer; and the first information comprises model parameters of the P AI models.

4. The method according to claim 3, wherein the third information comprises identifiers or indexes of the K AI models.

5. The method according to any one of claims 1 to 4, wherein after the sending the first information, the method further comprises:
receiving fourth information and/or fifth information, wherein the fourth information comprises a model parameter of a trained AI model, and the fifth information comprises auxiliary information; and
sending sixth information, wherein the sixth information indicates a correspondence between X communication parameters and Y AI models, the correspondence between the X communication parameters and the Y AI models is determined based on the fourth information and/or the fifth information, and both X and Y are positive integers.

6. A communication method, comprising:
receiving first information, wherein the first information indicates a correspondence between N communication parameters and M AI models, and both N and M are positive integers; and
receiving second information, wherein the second information indicates a first communication parameter among the N communication parameters; and in the correspondence, the first communication parameter corresponds to a first AI model among the M AI models.

7. The method according to claim 6, wherein the method further comprises:
receiving or sending AI data of the first AI model.

8. The method according to claim 6 or 7, wherein before the receiving the first information, the method further comprises:
sending third information, wherein the third information indicates K AI models supported by a second communication apparatus; wherein
the M AI models are comprised in the K AI models; or
P AI models among the M AI models are different from the K AI models, wherein P is a positive integer; and the first information comprises model parameters of the P AI models.

9. The method according to claim 8, wherein the third information comprises identifiers or indexes of the K AI models.

10. The method according to any one of claims 6 to 9, wherein after the receiving the first information, the method further comprises:
sending fourth information and/or fifth information, wherein the fourth information comprises a model parameter of a trained AI model, and the fifth information comprises auxiliary information; and
receiving sixth information, wherein the sixth information indicates a correspondence between X communication parameters and Y AI models, the correspondence between the X communication parameters and the Y AI models is determined based on the fourth information and/or the fifth information, and both X and Y are positive integers.

11. The method according to any one of claims 1 to 10, wherein the first communication parameter comprises a parameter associated with modulation and demodulation, and the first AI model comprises an AI model used for modulation and/or demodulation.

12. The method according to claim 11, wherein the parameter associated with modulation and demodulation comprises one or more of the following:
a modulation and coding scheme MCS, a frequency domain resource indication, a transmit power control command TPC command, or a transmitted precoding matrix indicator TPMI.

13. The method according to any one of claims 1 to 12, wherein the first communication parameter comprises configuration information of a reference signal, and the first AI model comprises an AI model used for channel prediction.

14. The method according to claim 13, wherein the configuration information of the reference signal comprises at least one of the following:
time domain configuration information, frequency domain configuration information, spatial domain configuration information, port information, periodicity information, or codebook configuration information.

15. The method according to any one of claims 1 to 10, wherein the first communication parameter comprises a parameter associated with beam management, and the first AI model comprises an AI model used for beam management.

16. The method according to claim 15, wherein the parameter associated with beam management comprises at least one of the following:
channel characteristic information of a cell, or quantity information of beams associated with the AI model used for beam management.

17. The method according to any one of claims 1 to 16, wherein the second information comprises the first communication parameter among the N communication parameters, or the second information comprises an index of the first communication parameter among the N communication parameters.

18. The method according to any one of claims 1 to 17, wherein the first AI model is deployed in a first communication apparatus and/or the second communication apparatus.

19. A communication apparatus, comprising a module configured to perform the method according to any one of claims 1 to 18.

20. A communication apparatus, comprising at least one processor, wherein the at least one processor is coupled to a memory; and the at least one processor is configured to perform the method according to any one of claims 1 to 18.

21. The communication apparatus according to claim 20, wherein the communication apparatus is a chip or a chip system.

22. A readable storage medium, wherein the storage medium stores a computer program or instructions, and when the computer program or the instructions are executed by a communication apparatus, the method according to any one of claims 1 to 18 is implemented.
